# EUROPÄISCHE PATENTSCHRIFT

(11) **EP 0 528 300 B1**
(45) Veröffentlichungstag und Bekanntmachung des Hinweises auf die Patenterteilung: **23.10.1996**
(21) Anmeldenummer: 92113509.1
(22) Anmeldetag: 07.08.1992
(51) Int. Cl.: G11B 23/087

(54) **Kassette mit Aufzeichnungsträger, insbesondere Magnetbandkassette**
Cassette with record carrier, particularly magnetic tape cassette
Cassette avec support d'enregistrement, notamment cassette à bande magnétique

(30) Priorität: 16.08.1991 DE 9110112 U
(43) Veröffentlichungstag der Anmeldung: 24.02.1993
(73) Patentinhaber: BASF Magnetics GmbH, 68165 Mannheim (DE)
(72) Erfinder: Schoettle, Klaus, W-6900 Heidelberg (DE); Dreyer, Juergen, W-7608 Willstaett (DE); Pavelka, Bozidar, W-7608 Willstaett (DE); Schmidts, Kurt, W-7635 Schwanau (DE)
(74) Vertreter: Langfinger, Klaus-Dieter, Dr.

(56) Entgegenhaltungen:
- EP-A- 0 274 566
- DE-A- 2 604 172
- DE-U- 9 110 112
- US-A- 4 769 731
- US-A- 4 908 725
- PATENT ABSTRACTS OF JAPAN vol. 7, no. 253 (P-235)10. November 1983 & JP-A-58 137 173

## Beschreibung

Die Erfindung betrifft eine Kassette mit einem Aufzeichnungsträger, insbesondere Magnetbandkassette, bestehend aus einem Gehäuse mit Deckel-, und Seitenwänden, wobei in wenigstens einer der, Seitenwände eine Öffnung mit einem diese Öffnung wenigstens teilweise verschließenden verschiebbaren Identifikationsteil vorgesehen ist und wobei wenigstens ein Hakenteil des Identifikationsteils eine Wandung des Gehäuses umgreift.

Bei handelsüblichen Audio- und Videokassetten sind Löschlaschen bekannt, die an der Gehäuserückseite vorhanden sind und solange eine Löschung der aufgenommenen Information nicht verhindern. Um eine aufgenommene Information vor einer Löschung zu schützen, ist diese Löschlasche herauszubrechen und der entstandene Hohlraum gibt dem Gerät das Identifikationssignal, die Aufnahme- und Löscheinrichtung zu sperren. Eine solche Kassette neu aufnehmbar zu machen, erfordert ein Überkleben des Hohlraums, was jedoch unbefriedigend ist, da die Detektoreinrichtung des Geräts sehr empfindlich sein kann und damit der erwartete Erfolg einer Löschung und Neuaufnahme nicht eintritt.

Aus der DE-OS 23 23 611 sind Identifikationsteile für Kassetten bekannt, die als Metall- oder Kunststoff-Glied mit zwei Stegen ausgebildet sind und durch unabhängiges Betätigen der Stege zwei benachbarte Ausnehmnungen entweder abdeckbar oder freigebbar sind. Die Metall- oder Kunststoff-Identifikationsglieder sind in einer Nut außen am Kassettengehäuse verschiebbar, und damit ist ihre Funktion auch durch Partikel- oder Schmutz-Einwirkung beeinträchtigbar.

Mit der US-PS 4 769 731 ist ein umschlagsymmetrisches Identifikationsteil bekannt, das in Einbaulage mindestens eine Hüllenwandung umgreift und zwischen zwei Stellungen, Öffnung oder Verschluß, nur in der Ebene einer Hüllenseite, z. B. einer Datendiskette, verschiebbar ist.

Die EP-A 274566 beschreibt eine Videokassette mit einem verschiebbaren Schreib-/Lese-Sperrelement, das eine Öffnung in der Kassettenrückwand wenigstens teilweise verschließt, wobei das Sperrelement flexibel ausgebildet und an einer zur Kassettenrückwand parallel angeordneten, zusätzlichen inneren Wand in Öffnungsrichtung schräg in das Kassettengehäuse hinein verschiebbar ist. Das Herausfallen des Sperrelements wird durch zwei Stege des Sperrelements verhindert.

Die Erfindung hat sich die Aufgabe gestellt, die Nachteile der bekannten Identifikationsglieder zu vermeiden und eine Kassette mit einem zweckmäßigerem Identifikationsteil bereitzustellen.

Diese Aufgabe wird mit einer Kassette mit einem Aufzeichnungsträger, insbesondere Magnetbandkassette, bestehend aus einem Gehäuse mit Deckel-, Boden- und Seitenaußenwänden, wobei in wenigstens einer der, Seitenaußenwände eine Öffnung mit einem diese Öffnung wenigstens teilweise verschließenden verschiebbaren Identifikationsteil vorgesehen ist, wobei wenigstens ein Hakenteil des Identifikationsteils eine Wandung des Gehäuses umgreift, erfindungsgemäß dadurch gelöst, daß das Identifikationsteil mittels des Hakenteils geführt auf einer innen liegenden Wandung des Gehäuses verschiebbar ist, die im Winkel zur Seitenaußenwand mit der Öffnung des Gehäuses vorgesehen ist, so daß das Identifikationsteil in Öffnungsrichtung in einer schrägen Bahn in das Gehäuse hinein verschiebbar ist.

Es wird das Problem gelöst, ein Identifikationsteil, das in Schließstellung eine Gehäuseöffnung abdeckend, teilweise mit der Gehäuseaußenwand fluchtend, angeordnete ist, geführt ins Innere der Kassette zu verschieben, so daß die Gehäuseöffnung freigegeben wird und der Verschiebevorgang dann mit derselben Präzision rückwärts bis zum Erreichen der Schließstellung ablaufen kann. Dabei wird außerdem eine serienmäßige Kassettenherstellung durch einfache Ausbildung des Identifikationsteils selbst und wenig Änderungen an Teilen handelsüblicher Kassetten erreicht.

In praktischer Ausgestaltung kann die Wandung eine Stegwand auf der Boden- oder Deckelwand des Gehäuses sein.

Falls eine solche Stegwand nicht sowieso vorhanden und benutzbar ist, ist dieselbe an der Bodenwand oder an der Deckwand auszubilden, was einfach im Spritzguß erfolgt. Zweckmäßig kann die Stegwand, auf der der Hakenteil verschiebbar ist, im Winkel von mindestens etwa 5°, vorzugsweise von etwa 10° bis etwa 20° horizontal zur Ebene der Seitenanßenwand angeordnet sein.

Dadurch ist es möglich, auch ohne besondere Abflachung des Identifikationsteils dieses wenigstens teilweise hinter einen Teil der Rückwand, also in Längsrichtung in das Gehäuse hineinzuverschieben, so daß ein Hohlraum für die Geräteabtastung freigegeben wird.

In einer weiteren Ausführung mit einer Verschiebung in Vertikalrichtung kann die Stegwand, auf der der Hakenteil verschiebbar ist, im Winkel von mindestens etwa 5°, vorzugsweise von etwa 10° bis etwa 20°, zu einer zur Längsachse, vertikal zur Ebene der Seitenaußenwand angeordnet sein.

Damit ist eine Verschiebung hinter den oberen Teil der Rückwand, also vertikal in das Gehäuse hinein zur Freigabe eines Hohlraums wie oben beschrieben realisierbar.

Zweckmäßigerweise kann das Identifikationsteil in Öffnungsrichtung gesehen im vorderen Teil eine Abflachung mit demselben Winkel wie die zugehörige Stegwand aufweisen.

Dadurch wird die räumliche Zuordnung von Identifikationsteil und Stegwand optimiert.

In der Ausführung mit der im wesentlichen zur Rückwand parallelen Stegwand ist das Identifikationsteil, in Öffnungs-Verschieberichtung gesehen, im vorderen Teil mit einer Abschrägung von ebenfalls mindestens etwa 5°, insbesondere von etwa 10°, versehen.

In weiterer praktischer Ausführung kann der Hakenteil im wesentlichen an einem Ende, insbesondere am in Öffnungsrichtung hinteren Ende, des Identifikationsteils angeordnet sein. Zweckmäßig ist auch die Anordnung einer Eingriffsnut oder eines Eingriffsstegs, an der dem Hakenteil gegenüberliegenden Seite des Identifikationsteils. Dadurch ergibt sich, wenn der Hakenteil am hinteren Ende des Identifikationsteils, in Öffnungsverschieberichtung gesehen, vorgesehen ist, eine gute Zugänglichkeit der Betätigungsteile, der Nut oder des Stegs in jeder Position des Identifikationsteils. Um die Schließ- und Öffnungspositionen des Identifikationsteils zu definieren, ist es vorteilhaft, zwischen Identifikationsteil und Stegwand, insbesondere nur an der Stegwand Rasteinrichtungen für die Öffnungs- und Schließstellung vorzusehen.

Um ein Kippen oder Herausfallen des Identifikationsteils zu verhindern ist es vorteilhaft, die Höhe des Identifikationsteils wenigstens teilweise größer ist als die Innenhöhe der halben Seitenwände des Gehäuses auszubilden.

In einer ersten Ausführung kann der Hakenteil einen vertikal angeordneten Fortsatz zur Abstützung am Oberteil der Kassette aufweisen. Gegebenenfalls kann dabei noch zusätzlich ein Niederhalter für das Identifikationsteil vorgesehen sein. Es ist in einer zweiten Ausführung jedoch günstiger, wenn der Identifikationsteil in der Höhe etwa der Innenhöhe der Seitenwände des Gehäuses entsprechend ausgebildet ist, denn dadurch kann auf sonst notwendige Niederhalter verzichtet werden.

Was die Anordnung der Stegwand betrifft, so ist eine Verbindung mit einer üblicherweise vorhandenen Zylinderbuchse für eine Befestigungsschraube zweckmäßig, insbesondere für ein längsverschiebliches Identifikationsteil. Es kann jedoch auch vorteilhaft eine Verbindung der Stegwand mit einer üblicherweise im Gehäuse vorhandenen Innenwand realisiert werden, insbesondere für vertikal verschiebbare Identifikationsteile.

Es ist außerdem vorteilhaft, wenn das Identifikationsteil aus einem Polyacetal- oder einem Fluorkohlenwasserstoff-Material besteht, besonders wegen deren geringen Abriebs- und guten Gleiteigenschaften. Zweckmäßig kann das Identifikationsteil daher aus Polyoxymethylen (POM) oder Polytetrafluoräthylen (PTFE) bestehen. Es kann das Identifikationsteil auch allgemein aus einem abriebfesten Kunststoffmaterial mit einem Anteil von Farbstoffen bestehen, um insbesondere bei der Herstellung der Kassette die Identifikationsteile gut herstellbar, bereitstellbar, montierbar und kontrollierbar zu machen.

Ausführungsbeispiele der Erfindung sind in der Zeichnung dargestellt und nachfolgend beschrieben.

In der Zeichnung zeigen:
- Fig. 1: einen perspektivischen Eckteil eines Kassetten-Bodenteils gemäß der Erfindung
- Fig. 2: ein perspektivisches Identifikationsteil zur Verwendung in einer Kassette gemäß Fig. 1
- Fig. 3: eine schematische Draufsicht auf den Eckteil des Kassetten-Bodenteils gemäß Fig. 1 mit einem Identifikationsteil gemäß Fig. 2 in Schließlage
- Fig. 4: die Draufsicht aus Fig. 3 mit dem Identifikationsteil in Offenlage
- Fig. 5: eine maßstäblich verkleinerte, schematische Draufsicht auf ein vollständiges Kassetten-Bodenteil mit dem Identifikationsteil in Schließlage
- Fig. 6: eine Variante eines Identifikationsteils der Fig. 2
- Fig. 7: das Identifikationsteil der Fig. 6 in Schließlage in einer schematischen Draufsicht entsprechend Fig. 3
- Fig. 8: einen Ausschnitt eines fertig montierten Kassettengehäuses mit schematisch sichtbar dargestellten Niederhalte-Rippen im Kassetten-Oberteil
- Fig. 9: den Ausschnitt gemäß Fig. 8 mit einer Rückwandverdickung als Niederhalter im Kassetten-Oberteil
- Fig. 10: eine weitere Version eines Identifikationsteils für Vertikal-Verschiebung
- Fig. 11: ein perspektivisches Eckteil eines Kassetten-Bodenteils gemäß Fig. 1 mit einer Stegwand und dem Identifikationsteil gemäß Fig. 10 zur Vertikalverschiebung.

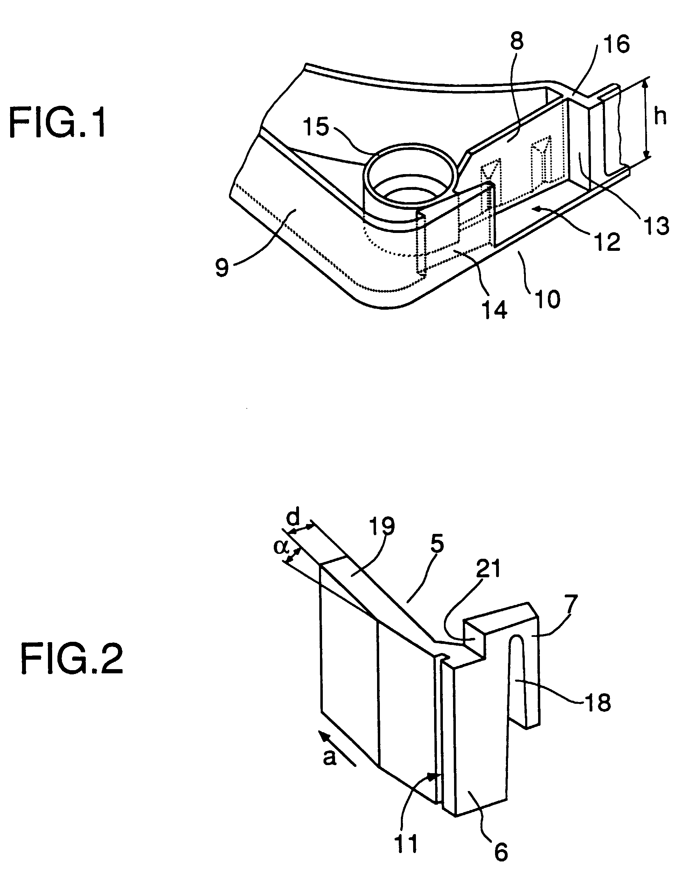

Figur 2 zeigt ein Identifikationsteil, Schieber 5, das mittels eines am hinteren Ende 6 vorgesehenen Hakenteils 7 an einer Stegwand 8 des Bodenteils 9 des Gehäuses einer Videokassette 10 einhängbar und in Öffnungsrichtung (Pfeil a) verschiebbar ist. Eine Eingriffsnut 11, auch durch einen Steg ersetzbar, dient zur Betätigung des Identifikationsteils.

Die Bezeichnung "Identifikationsteil" soll im Rahmen dieser Erfindung für jegliche Lösch- und Schreibsperren und Kennzeichen oder Markierungen an Kassetten, gelten, die körperlich vorhanden und durch geeignete Geräte abtastbar und auswertbar sind.

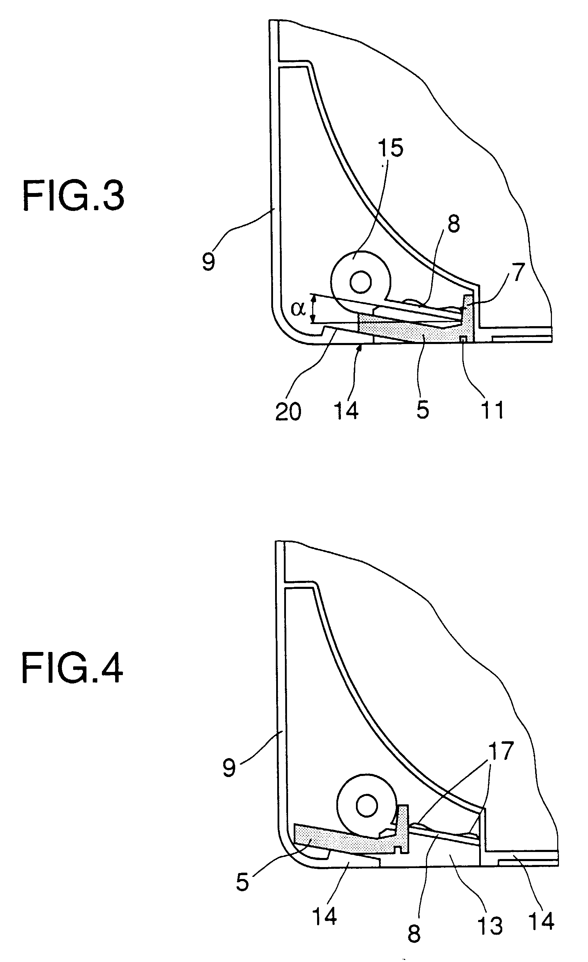

Der Schieber 5 dient, wie den schematischen Funktionsdarstellungen der Figuren 3 und 4 entnehmbar ist, durch Verschiebung in der Ebene der Bodenwand 12 der Kassette 10 dem Öffnen, Offenstellung siehe Figur 4, und Verschließen, Schließstellung siehe Figur 3, der Öffnung 13 oder des Hohlraums (Figur 4) in der Rückwand 14 der Kassette 10.

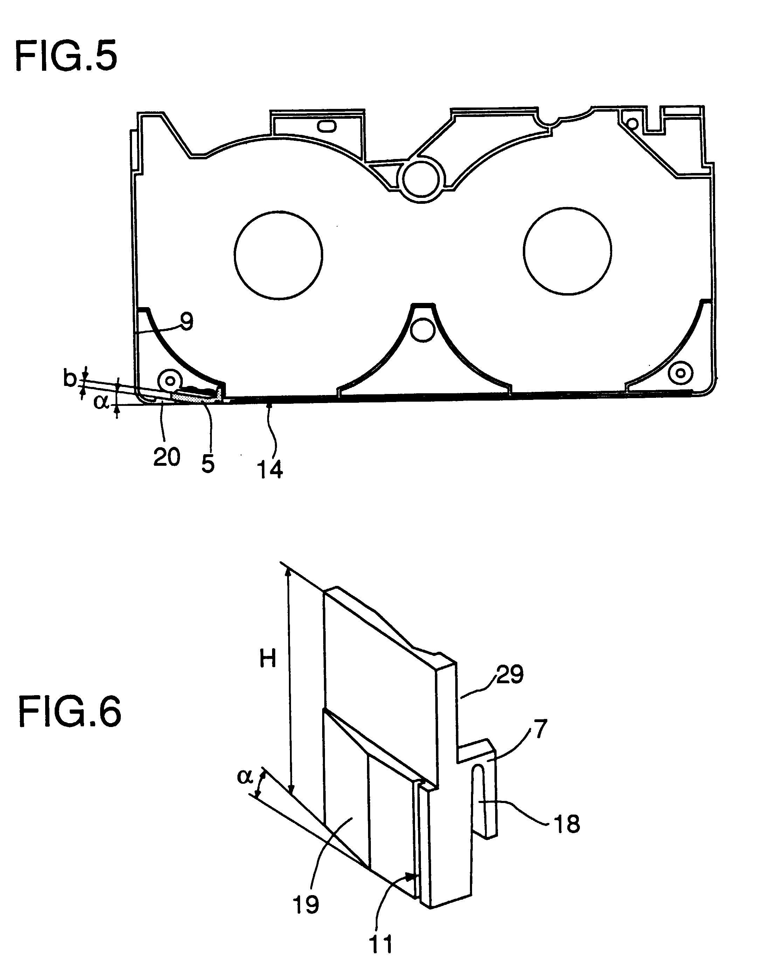

Einen vollständigen Bodenteil der Kassette 10 zeigt Figur 5, worin erkennbar ist, daß der dargestellte Eckteil, z. B. in Figuren 1, 3 und 4, die hintere linke Ecke des Bodenteils 9 ist. Besonderheiten der Kassette 10 in Figuren 1 bis 5 sind noch die folgenden.

Die Stegwand 8 ist zwischen der Zylinderform-Buchse 15 für eine nicht dargestellte Befestigungsschraube und einer hier etwa senkrecht zur Rückwand 14 verlaufenden Innenwand 16 des Bodenteils 9 angeordnet, wodurch eine sehr stabile Ausführung erreicht wird. Die Stegwand 8 ist mit Rastrippen 17 an der Rückseite versehen, die mit dem elastischen Hakenteil 7, genauer mit dem Hakenspalt 18 in den zwei Raststellungen Offenstellung (Figur 4) und Schließstellung (Figur 3) zusammenwirken.

Die Stegwand 8 ist im Winkel α von ca. 10° zur Rückwand 14 bzw. zu deren nicht dargestellter Längsachse angeordnet; der Winkel α kann jedoch mindestens 5° betragen und sollte praktisch im Bereich von α etwa 10° bis α etwa 20° liegen.

Wie gut in Figuren 3 und 4 erkennbar, ist die Dicke d des Vorderteils 19 des Schiebers 5 der Breite b des Abstands zwischen Zylinderbuchse 15 und Rückwandabschnitt 20 so angepaßt, daß der Schieber 5 auf seiner Verschiebebahn in die Offenstellung und in die Schließstellung und in diesen Stellungen selbst ständig an zwei Stellen geführt ist.

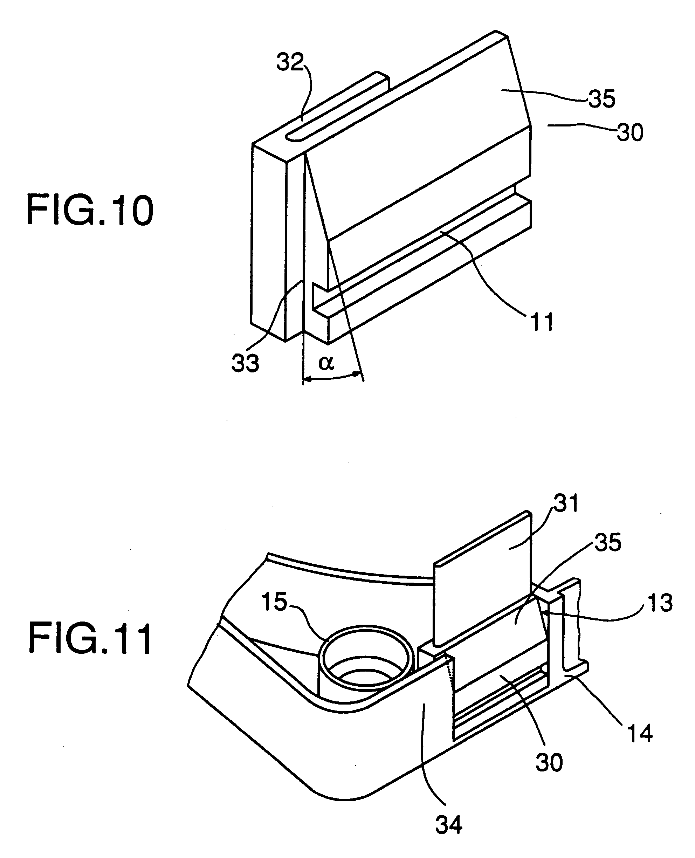

Selbstverständlich ist es auch möglich, die Anordnung und Länge des Hakenteils 32 des Schiebers 30, z. B. wie in Figuren 10 und 11 gezeigt, so zu wählen, daß auch ohne eine besondere Führung des Vorderteils des Schiebers 30 eine stabile Führung auf der Verschiebebahn und in den Ruhestellungen erreicht wird.

Rückwandabschnitt 20 und Vorderteil 19 des Schiebers 5 können wie dargestellt zweckmäßig etwa mit dem Winkel α der Stegwand 8 keilförmig abgeflacht sein. Es ist aber auch möglich, nur eine der beiden Flächen keilförmig auszubilden oder die entsprechenden Kanten abgerundet auszuführen.

Der vertikale Fortsatz 21 des Hakenteils 7 dient dazu, durch Führung im Oberteil der Kassette 10, den Schieber unverlierbar zu machen und ein Kippen zu verhindern. Die Höhe des Vorderteils 19 des Schiebers 5 entspricht etwa der halben inneren Höhe h der ganzen inneren Höhe 2h der Rückwand 14.

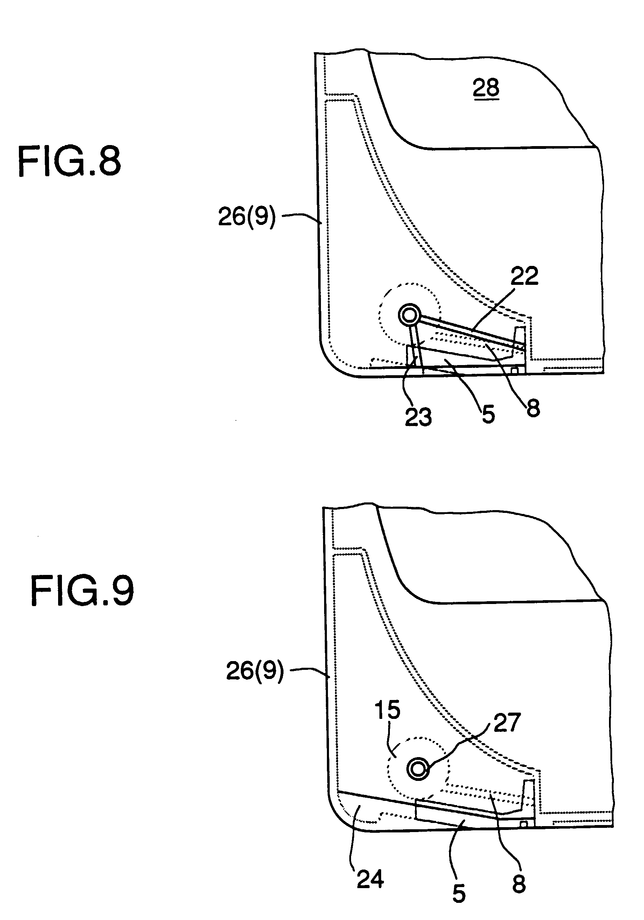

Um die Lage des Schiebers 5 noch weiter zu stabilisieren, ist es noch möglich, wie Figuren 8 und 9 zeigen, Niederhaltemittel, Zusatzstege 22 und 23 in Figur 8 oder eine Verdickung 2 der Rückwand 24 des Oberteils 26 in Figur 9, vorzusehen, die über dem Schieber 5 angeordnet sind und diesen an einer unerwünschten Vertikalbewegung hindern. In den Figuren 8 und 9 sind die Linien des Oberteils 26 der Kassette 10 ausgezogen dargestellt und die Linien des Bodenteils 9 gestrichelt. Mit 27 ist das Gegenstück zur Zylinderbuchse 15 bezeichnet. 28 ist ein Teil des Fensters im Oberteil 26.

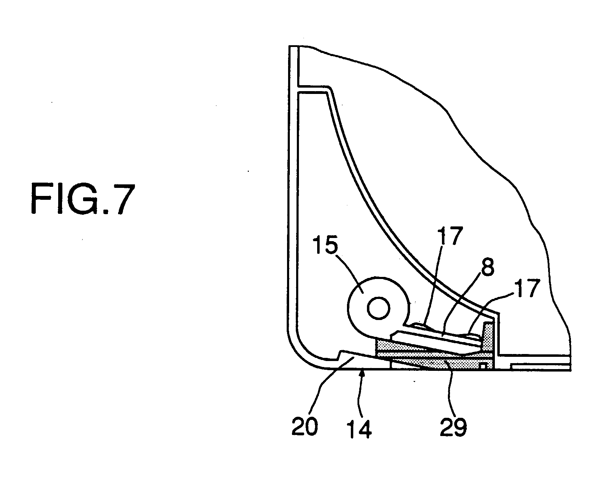

Als Alternative zu den beschriebenen Niederhaltemitteln der Figuren 8 und 9 zeigt Figur 6 eine Ausführung eines Schiebers 29, mit einer Höhe H, die größer ist als die halbe Innenhöhe h und im wesentlichen der ganzen Innenhöhe 2h der Rückwand 14 entsprechen kann. Dadurch wird ohne aufwendige Änderungen des Oberteils 26 eine bessere Kippstabilität, eine bessere Führung und eine gute Gleitbewegung des Schiebers 29 erreicht. Die übrige Ausführung des Schiebers 29, Hakenteil 7, Nut 11 ist gegenüber Schieber 5 unverändert. Am Vorderteil 19 ist jedoch eine Abschrägung im Winkel α zu erkennen, die den Schieber 29 grundsätzlich befähigt, auch ohne Winkellage der Stegwand 8, also bei einer im wesentlichen Parallellage zur Rückwand 14 ein Hineinbewegen des Schiebers 29 in das Gehäuse der Kassette 10 zu bewerkstelligen. Figur 7 zeigt den Schieber 29 jedoch wieder in Verbindung mit der im Winkel α schräggestellten Stegwand 8 entsprechend Figuren 1 und 3 bis 5.

Figuren 10 und 11 zeigen einen Schieber 30 in Verbindung mit einer höher als die Innenhöhe h der halben Rückwand 14 reichenden Stegwand 31, die in diesem Fall an der Innenwand 16 und nicht an der Zylinderbuchse 15 angeformt ist. Eine Zylinderbuchse 15 braucht also nicht vorhanden zu sein, was in Kassettengehäusen die vernietet oder verschweißt und nicht verschraubt sind, ja auch der Fall sein kann. Auch, wenn an dieser Stelle eine Verschraubung nicht vorgesehen ist, fehlt die Buchse 15.

Der Schieber 30 ist mit einem über die ganze Höhe reichenden Hakenteil 32 versehen, der gegenüber dem Hakenteil 7 um 90° gedreht angebracht ist, um das Umgreifen der hier senkrechten Stegwand 31 zu ermöglichen und durch die größere Länge des Hakenteils 32 gegenüber Hakenteil 8 die Führung über die vertikale Verschiebebahn zu erreichen. Eine Führungswinkelkante 33 verbessert nochmals diese Führungswirkung durch Abstützung am Ende des Rückwandabschnitts 32. Die Stegwand 31 steht hier senkrecht und nicht im Winkel zur senkrechtstehenden Rückwand 14 geneigt wie die Stegwand 8 zur Längsachse der Rückwand 14.

Deshalb erhält der Schieber 30 eine Abschrägung 35 im Winkel α von mindestens 5°, praktisch von zwischen etwa 10° und etwa 2o° damit der Schieber 30 auf der vertikalen Verschiebebahn an der nicht dargestellten Unterkante der Rückwandhälfte vorbei in das Oberteil 26 der Kassette 10 einschiebbar ist.

Es ist jedoch auch möglich, die Stegwand 31 nach hinten (in die Zeichenebene hinein) geneigt auszubilden im obenbeschriebenen Winkel α von mindestens 5°, praktisch von zwischen etwa 10° und etwa 20°. Auch in letzterem Fall kann, je nachdem wie die Kante der Rückwand 14 des Oberteils 26 ausgebildet ist, der Vorderteil des Schiebers 30 ebenfalls mit einer keilförmigen Abflachung ausgebildet sein, wie beim Vorderteil 19 in Fig. 2.

Als Material für den Schieber 5, 29 oder 30 kann ein Polyacetal oder ein Fluorkohlenstoff zweckmäßig verwandt werden, z. B. Polyoxymethylen oder Polytetrafluoräthylen wegen deren geringen Abriebs und guter Gleiteigenschaften. Es ist jedoch auch möglich, jeden abriebsfesten Kunststoff zu verwenden. Alle geeigneten Kunststoffe können auch Farbstoffanteile enthalten.

Eine Kassette mit einem Aufzeichnungsträger, insbesondere einem Magnetaufzeichnungsträger, ist mit einem verschiebbaren Identifikationsteil ausgebildet, das in das Kassettengehäuse einschiebbar ist. Dazu ist eine Stegwand hinter einer Kassettenöffnung in einer Kassetenwandung vorgesehen, die im Winkel zu der besagten Kassettenwandung verläuft. Es kann auch eine zur Kassettenwandung etwa parallele Stegwand vorgesehen sein, und das als Schieber ausgebildete Identifikationsteil ist mit einer in Öffnungs-Schieberichtung vorderen Abschrägung versehen, um den Schieber an der in Öffnungsrichtung befindlichen Kante der Kassettenwandung teilweise vorbeizuschieben.
Die Kassette kann für Aufzeichnung/Wiedergabe von Signalen jeglicher Art verwendbar sein, und mit dem ortsverschieblichen Identifikationsteil sind mittelbar beliebige Funktionen des zugehörigen Kassettengeräts steuerbar.

Die beschriebenen Schieber-Vorrichtungen sind als Löschsperrglieder in Videokassetten in der Praxis eingesetzt und geprüft worden und haben sich auch in Langzeitversuchen hervorragend bewährt.

## Patentansprüche

1. Kassette mit einem Aufzeichnungsträger, insbesondere Magnetbandkassette, bestehend aus einem Gehäuse mit Dekkel- und Bodenwänden und mit Seitenaußenwänden, wobei in wenigstens einer der Seitenaußenwände eine Öffnung (13) mit einem diese Öffnung wenigstens teilweise verschließenden verschiebbaren Identifikationsteil (5, 29, 30) vorgesehen ist, wobei wenigstens ein Hakenteil (7), des Identifikationsteils eine Wandung (8, 31) des Gehäuses umgreift, dadurch gekennzeichnet, daß das Identifikationsteil (5, 29, 30) mittels des Hakenteils geführt auf einer innenliegenden Wandung (8, 32) des Gehäuses verschiebbar ist, die im Winkel (a) zur Seitenaußenwand (14) mit der Öffnung (13) des Gehäuses vorgesehen ist, so daß das Identifikationsteil (5, 29, 30) in Öffnungsrichtung in einer schrägen Bahn in das Gehäuse hinein verschiebbar ist.

2. Kassette nach Anspruch 1, dadurch gekennzeichnet, daß die innenliegende Wandung eine Stegwand (8, 31) auf der Bodenwand (12) oder Deckelwand des Gehäuses ist.

3. Kassette nach Anspruch 2, dadurch gekennzeichnet, daß die Stegwand (8), auf der der Hakenteil (7) verschiebbar ist, im Winkel (α) von mindestens etwa 5°, insbesondere von etwa 10° bis etwa 20°, horizontal zur Ebene der Seitenaußenwand angeordnet ist, so daß das Identifikationsteil (5, 29, 30) horizontal verschiebbar ist.

4. Kassette nach Anspruch 2, dadurch gekennzeichnet, daß die Stegwand (8), auf der der Hakenteil verschiebbar ist, im Winkel von mindestens etwa 5°, insbesondere von etwa 10° bis etwa 20° vertikal zur Ebene der Seitenaußenwand angeordnet ist, so daß das Identifikationsteil (5, 29, 30) vertikal verschiebbar ist.

5. Kassette nach Anspruch 3 oder 4, dadurch gekennzeichnet, daß das Identifikationsteil (5) im in Öffnungsrichtung (a) gesehen vorderen Teil (19) eine Abflachung in im wesentlichen demselben Winkel (α) wie die zugehörige Stegwand aufweist.

6. Kassette nach einem der Ansprüche 1 bis 5, dadurch gekennzeichnet, daß der Hakenteil (7) im wesentlichen an einem Ende des Identifikationsteils (5, 29) angeordnet ist.

7. Kassette nach einem der Ansprüche 1 bis 6, dadurch gekennzeichnet, daß eine Eingriffsnut (11) oder ein Eingriffssteg an der dem Hakenteil (8, 32) gegenüberliegenden Seite des Identifikationsteils (5, 29, 30) angebracht ist.

8. Kassette nach einem der Ansprüche 1 bis 7, dadurch gekennzeichnet, daß zwischen Identifikationsteil (5, 29) und Stegwand (8) Rasteinrichtungen (17) für die Offen- und Schließstellung vorgesehen sind.

9. Kassette nach einem der Ansprüche 1 bis 8, dadurch gekennzeichnet, daß die Höhe (H) des Identifikationsteils wenigstens teilweise größer ist als die Innenhöhe (h) der halben Seitenaußenwände des Gehäuses.

10. Kassette nach Anspruch 9, dadurch gekennzeichnet, daß der Hakenteil (7) einen vertikal angeordneten Fortsatz (21) aufweist.

11. Kassette nach Anspruch 1 und 2 und einem der Ansprüche 3 bis 10, dadurch gekennzeichnet, daß die Stegwand (8) mit einer Zylinderbuchse (15) für eine Befestigungsschraube verbunden ist.

12. Kassette nach Anspruch 1 und 2 und einem der Ansprüche 3 bis 10, dadurch gekennzeichnet, daß die Stegwand (8, 32) mit einer weiteren Innenwand (16) des Gehäuses verbunden ist.

13. Kassette nach einem der Ansprüche 1 bis 12, dadurch gekennzeichnet, daß im Kassettengehäuse oberhalb der Verschiebungsbahn wenigstens ein Niederhalter (22 bis 24) für den Identifikationsteil vorgesehen ist.

14. Kassette nach Ansprüchen 1 und 9 und einem der Ansprüche 2 bis 8 und 10 bis 13, dadurch gekennzeichnet, daß der Identifikationsteil (29) in der Höhe (H) etwa der Innenhöhe (2h) der Seitenaußenwände des Gehäuses entspricht.

15. Kassette nach einem der Ansprüche 1 bis 14, dadurch gekennzeichnet, daß der Identifikationsteil (5, 29, 30) aus einem Polyacetal- oder einem Fluorkohlenstoff-Material besteht.

16. Kassette nach Anspruch 1 bis 15, dadurch gekennzeichnet, daß der Identifikationsteil (5, 29, 30) aus einem abriebfesten Kunststoff mit einem Anteil Farbstoff besteht.

## Claims

1. A cassette with a recording medium, in particular a magnetic tape cassette, comprising a housing with top and bottom walls and outer side walls, an opening (13) being provided in at least one of the outer side walls, with a displaceable identification part (5, 29, 30) closing this opening at least partially, at least one hook part (7) of the identification part gripping around a wall (8, 31) of the housing, wherein the identification part (5, 29, 30) is displaceable by means of the hook part, guided on an inner wall (8, 32) of the housing, which inner wall is provided with the opening (13) of the housing at an angle (α) to the outer side wall (14), so that the identification part (5, 29, 30) can be displaced in the opening direction along an oblique path into the housing.

2. A cassette as claimed in claim 1, wherein the inner wall is a web (8, 31) on the bottom wall (12) or top wall of the housing.

3. A cassette as claimed in claim 2, wherein the web (8) on which the hook part (7) can be displaced is arranged at an angle (α) of at least about 5°, in particular of about 10° to about 20°, horizontally with respect to the plane of the outer side wall, so that the identification part (5, 29, 30) can be displaced horizontally.

4. A cassette as claimed in claim 2, wherein the web (8) on which the hook part can be displaced is arranged at an angle of at least about 5°, in particular of about 10° to about 20°, vertically with respect to the plane of the outer side wall, so that the identification part (5, 29, 30) can be displaced vertically.

5. A cassette as claimed in claim 3 or 4, wherein the identification part (5) in the front part (19), seen in the opening direction (a), has a flattening at essentially the same angle (α) as the associated web.

6. A cassette as claimed in any of claims 1 to 5, wherein the hook part (7) is arranged essentially at one end of the identification part (5, 29).

7. A cassette as claimed in any of claims 1 to 6, wherein an engaging groove (11) or an engaging tongue is attached on the side of the identification part (5, 29, 30) opposite the hook part (8, 32).

8. A cassette as claimed in any of claims 1 to 7, wherein catch devices (17) for the open and closed position are provided between identification part (5, 29) and web (8).

9. A cassette as claimed in any of claims 1 to 8, wherein the height (H) of the identification part is at least partly greater than the inside height (h) of the half outer side walls of the housing.

10. A cassette as claimed in claim 9, wherein the hook part (7) has a vertically arranged extension (21).

11. A cassette as claimed in claims 1 and 2 and any of claims 3 to 10, wherein the web (8) is connected to a cylinder sleeve (15) for a fastening screw.

12. A cassette as claimed in claim 1 and 2 and any of claims 3 to 10, wherein the web (8, 32) is connected to a further inside wall (16) of the housing.

13. A cassette as claimed in any of claims 1 to 12, wherein at least one holding-down means (22 to 24) for the identification part is provided in the cassette housing above the displacement path.

14. A cassette as claimed in claims 1 and 9 and any of claims 2 to 8 and 10 to 13, wherein the identification part (29) corresponds in height (H) approximately to the inside height (2h) of the rear wall (14) of the housing.

15. A cassette as claimed in any of claims 1 to 14, wherein the identification part (5, 29, 30) consists of a polyacetal material or a fluorocarbon material.

16. A cassette as claimed in any of claims 1 to 15, wherein the identification part (5, 29, 30) consists of an abrasion-resistant plastic with a proportion of pigment.

## Revendications

1. Cassette contenant un support d'enregistrement, en particulier cassette de bande magnétique, constituée d'un boîtier ayant une paroi couvercle, une paroi fond et des parois extérieures latérales, dans au moins une des parois extérieures latérales étant prévue une ouverture (13) qui est fermée au moins partiellement par un élément mobile d'identification (5, 29, 30), au moins une partie crochet (7) de cet élément d'identification enserrant une paroi (8, 31) du boîtier, caractérisée par le fait que l'élément d'identification (5, 29, 30) est mobile, guidé par la partie crochet, sur une paroi intérieure (8, 32) du boîtier qui fait un angle (α) avec la paroi extérieure latérale (14) pourvue de l'ouverture (13) du boîtier, de sorte que, l'élément d'identification (5, 29, 30) est mobile dans le sens d'ouverture vers l'intérieur du boîtier sur une trajectoire oblique.

2. Cassette selon la revendication 1, caractérisée par le fait que la paroi intérieure est une paroi entretoise (8, 31) prévue sur la paroi fond (12) ou la paroi couvercle du boîtier.

3. Cassette selon la revendication 2, caractérisée par le fait que la paroi entretoise (8) sur laquelle la partie crochet (7) est mobile fait horizontalement un angle (α) d'au moins environ 5°, en particulier d'environ 10° à environ 20°, avec le plan de la paroi extérieure latérale, de sorte que l'élément d'identification (5, 29, 30) est mobile horizontalement.

4. Cassette selon la revendication 2, caractérisée par le fait que la paroi entretoise (8) sur laquelle la partie crochet est mobile fait verticalement un angle d'au moins environ 5°, en particulier d'environ 10° à environ 20°, avec le plan de la paroi extérieure latérale, de sorte que l'élément d'identification (5, 29, 30) est mobile verticalement.

5. Cassette selon l'une des revendications 3 et 4, caractérisée par le fait que l'élément d'identification (5) présente dans sa partie (19) située en avant dans le sens d'ouverture (a) un aplatissement qui fait sensiblement le même angle (α) que la paroi entretoise associée.

6. Cassette selon l'une des revendications 1 à 5, caractérisée par le fait que la partie crochet (7) est placée sensiblement à une extrémité de l'élément d'identification (5, 29).

7. Cassette selon l'une des revendications 1 à 6, caractérisée par le fait qu'une rainure d'engagement (11) ou une nervure d'engagement est faite sur la face de l'élément d'identification (5, 29, 30) opposée à la partie crochet (8, 32).

8. Cassette selon l'une des revendications 1 à 7, caractérisée par le fait qu'entre l'élément d'identification (5, 29) et la paroi entretoise (8) sont prévus des moyens d'arrêt (17) pour la position ouverte et la position fermée.

9. Cassette selon l'une des revendications 1 à 8, caractérisée par le fait que la hauteur (H) de l'élément d'identification est au moins en partie supérieure à la hauteur intérieure (h) des demi-parois extérieures latérales du boîtier.

10. Cassette selon la revendication 9, caractérisée par le fait que la partie crochet (7) présente un appendice vertical (21).

11. Cassette selon les revendications 1 et 2 et l'une des revendications 3 à 10, caractérisée par le fait que la paroi entretoise (8) est jointe à une douille cylindrique (15) destinée à recevoir une vis de fixation.

12. Cassette selon les revendications 1 et 2 et l'une des revendications 3 à 10, caractérisée par le fait que la paroi entretoise (8, 32) est jointe à une autre paroi intérieure (16) du boîtier.

13. Cassette selon l'une des revendications 1 à 12, caractérisée par le fait que dans son boîtier est prévu au-dessus de la trajectoire de déplacement au moins un élément de retenue (22 à 24) pour l'élément d'identification.

14. Cassette selon les revendications 1 et 9 et l'une des revendications 2 à 8 et 10 à 13, caractérisée par le fait que la hauteur (H) de l'élément d'identification (29) correspond à peu près à la hauteur intérieure (2h) des parois intérieures latérales du boîtier.

15. Cassette selon l'une des revendications 1 à 14, caractérisée par le fait que l'élément d'identification (5, 29, 30) est constitué d'une matière au polyacétal ou fluorocarbonée.

16. Cassette selon les revendications 1 à 15, caractérisée par le fait que l'élément d'identification (5, 29, 30) est constitué d'un plastique résistant à l'abrasion contenant un colorant.
